# EUROPÄISCHE PATENTANMELDUNG

(11) **EP 4 236 009 A1**
(43) Veröffentlichungstag der Anmeldung: **30.08.2023**
(21) Anmeldenummer: 22158454.3
(22) Anmeldetag: 24.02.2022
(51) Int. Cl.: H02J 7/00

(54) **SYSTEM, AKKUPACK, ELEKTRISCH ANGETRIEBENES BEARBEITUNGSGERÄT ODER LADEGERÄT UND VERFAHREN ZUM BETREIBEN EINES SYSTEMS**

(71) Anmelder: Andreas Stihl AG & Co. KG, 71336 Waiblingen (DE)
(72) Erfinder: Koch, Friedheim, 71573 allmersbach im Tal (DE); Sämann, Christian, 70372 Stuttgart (DE)
(74) Vertreter: Patentanwälte Ruff, Wilhelm, Beier, Dauster & Partner mbB

(57) **Zusammenfassung**

Die Erfindung bezieht sich auf ein System (1), wobei das System (1) aufweist:
- einen Akkupack (2), und
- ein elektrisch angetriebenes Bearbeitungsgerät (3) oder ein Ladegerät (4),
- wobei der Akkupack (2) und das Bearbeitungsgerät (3) zur lösbaren elektrischen Verbindung miteinander zur Versorgung des Bearbeitungsgeräts (3) mit elektrischer Antriebsleistung (AL) von dem Akkupack (2) ausgebildet sind, oder
- wobei der Akkupack (2) und das Ladegerät (4) zur lösbaren elektrischen Verbindung miteinander zur Versorgung des Akkupacks (2) mit elektrischer Aufladeleistung (LL) von dem Ladegerät (4) ausgebildet sind,
- wobei der Akkupack (2) eine elektrische Sicherung (5) aufweist und bei nichtausgelöster Sicherung (5) zur Datenübertragung (DU) von dem Akkupack (2) zu dem Bearbeitungsgerät (3) oder dem Ladegerät (4) und bei ausgelöster Sicherung (5) zu keiner Datenübertragung ausgebildet ist,
- wobei das Bearbeitungsgerät (3) oder das Ladegerät (4) bei elektrischer Verbindung zur Erkennung der Datenübertragung (DU) zur Freigabe eines Antriebsbetriebs (AB) des Bearbeitungsgeräts (3) oder eines Aufladebetriebs (LB) des Ladegeräts (4) und keiner Datenübertragung zu keiner Freigabe des Antriebsbetriebs oder des Ladebetriebs ausgebildet ist.

## Beschreibung

### ANWENDUNGSGEBIET UND STAND DER TECHNIK

Die Erfindung bezieht sich auf ein System aufweisend einen Akkupack und ein elektrisch angetriebenes Bearbeitungsgerät oder ein Ladegerät, einen Akkupack für ein solches System, ein elektrisch angetriebenes Bearbeitungsgerät oder ein Ladegerät für ein solches System und ein Verfahren zum Betreiben eines solchen Systems.

### AUFGABE UND LÖSUNG

Der Erfindung liegt als Aufgabe die Bereitstellung eines Systems, eines Akkupacks für ein solches System, eines elektrischen angetriebenen Bearbeitungsgeräts oder eines Ladegeräts für ein solches System und eines Verfahrens zum Betreiben eines solchen Systems zugrunde, das jeweils verbesserte Eigenschaften aufweist.

Die Erfindung löst diese Aufgabe durch die Bereitstellung eines Systems, eines Akkupacks für ein solches System, eines elektrischen angetriebenen Bearbeitungsgeräts oder eines Ladegeräts für ein solches System und eines Verfahrens zum Betreiben eines solchen Systems beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße System weist einen Akkupack (Englisch: battery pack) und, insbesondere zusätzlich, ein elektrisch angetriebenes Bearbeitungsgerät oder ein Ladegerät auf. Der Akkupack und das Bearbeitungsgerät oder das Ladegerät sind zur lösbaren elektrischen Verbindung miteinander zur Versorgung des Bearbeitungsgeräts mit elektrischer Antriebsleistung von dem Akkupack oder des Akkupacks mit elektrischer Aufladeleistung von dem Ladegerät ausgebildet. Der Akkupack weist eine elektrische Sicherung auf. Der Akkupack ist bei nicht-ausgelöster Sicherung, und insbesondere mindestens oder nur bei elektrischer Verbindung, zur Datenübertragung von dem Akkupack zu dem Bearbeitungsgerät oder dem Ladegerät, insbesondere zeitlich dauerhaft, ausgebildet. Der Akkupack ist bei ausgelöster Sicherung, und insbesondere mindestens bei elektrischer Verbindung, zu keiner Datenübertragung, insbesondere zeitlich dauerhaft, ausgebildet. Das Bearbeitungsgerät oder das Ladegerät ist, insbesondere nur, bei elektrischer Verbindung zur Erkennung der Datenübertragung zur Freigabe eines Antriebsbetriebs des Bearbeitungsgeräts oder eines Aufladebetriebs des Ladegeräts, insbesondere zeitlich dauerhaft, ausgebildet. Das Bearbeitungsgerät oder das Ladegerät ist, insbesondere nur, bei elektrischer Verbindung zur, insbesondere zu der, Erkennung keiner Datenübertragung zu keiner Freigabe des Antriebsbetriebs oder des Ladebetriebs, insbesondere zeitlich dauerhaft, ausgebildet.

Dies, insbesondere die Sicherung, ermöglicht eine Bewahrung des Akkupacks, und insbesondere somit des Systems, vor Beschädigung. Zusätzlich oder alternativ ermöglicht die elektrische Verbindung, insbesondere bei ausgelöster Sicherung, die Erkennung, insbesondere keiner Datenübertragung. Insbesondere ermöglicht die elektrische Verbindung die Versorgung mit, insbesondere wenig, Leistung und somit die Erkennung. Weiter zusätzlich oder alternativ ermöglicht die Erkennung keiner Datenübertragung keine Freigabe des Antriebsbetriebs oder des Ladebetriebs. Weiter zusätzlich oder alternativ ermöglicht keine Freigabe des Antriebsbetriebs oder des Ladebetriebs keine Versorgung mit, insbesondere relativ großer, Leistung. Somit ermöglicht dies eine Bewahrung des Akkupacks, und insbesondere somit des Systems, vor, insbesondere weiterer, Beschädigung.

Insbesondere können/kann das System und/oder das Ladegerät elektrisch sein.

Das System, der Akkupack, das Bearbeitungsgerät und/oder das Ladegerät können/kann mobil bzw. portabel sein. Insbesondere kann mobil eine Masse von maximal 50 kg (Kilogramm), insbesondere von maximal 20 kg, insbesondere von maximal 10 kg, insbesondere von maximal 5 kg, und/oder von minimal 1 kg, insbesondere von minimal 2 kg, bedeuten.

Der Akkupack kann eine Mehrzahl von Akkumulatorzellen aufweisen. Insbesondere können die Akkumulatorzellen jeweils einzelne wieder aufladbare Speicherelemente für elektrische Energie auf elektrochemischer Basis sein. Zusätzlich oder alternativ können die Akkumulatorzellen Lithium-Ionen-Akkumulatorzellen sein. Weiter zusätzlich oder alternativ können die Akkumulatorzellen gleich, insbesondere typ- und/oder baugleich, sein. Weiter zusätzlich oder alternativ kann eine, insbesondere jeweilige, Zell-Spannung, insbesondere Zell-Nennspannung, einer, insbesondere jeweiligen, der Akkumulatorzellen minimal 2 V (Volt) und/oder maximal 4 V, insbesondere 3,6 V, sein. Weiter zusätzlich oder alternativ können die Akkumulatorzellen Rundzellen, prismatische Zellen oder Pouchzellen sein.

Die Antriebsleistung kann zur Entladung des Akkupacks und/oder für den Antriebsbetrieb sein. Zusätzlich oder alternativ kann die Aufladeleistung zur Aufladung des Akkupacks und/oder für den Aufladebetrieb sein.

Das Bearbeitungsgerät kann ein Bearbeitungswerkzeug und/oder einen, insbesondere elektrischen, Antriebsmotor, insbesondere zum Antrieb des Bearbeitungswerkzeugs, aufweisen. Insbesondere kann die Antriebsleistung für den Antriebsmotor sein. Zusätzlich oder alternativ kann der Antriebsbetrieb ein Antriebsbetrieb des Antriebsmotors sein. Weiter zusätzlich oder alternativ kann das Bearbeitungsgerät das Ladegerät aufweisen. Insbesondere kann das Ladegerät in dem Bearbeitungsgerät, insbesondere fest, eingebaut sein.

Der Akkupack und das Bearbeitungsgerät oder das Ladegerät können zum Tragen des Akkupacks durch das Bearbeitungsgerät und/oder das Ladegerät ausgebildet sein.

Der Begriff "umfasst" oder "hat" kann für den Begriff "aufweist" synonym verwendet werden.

Der Begriff "konfiguriert" kann für den Begriff "ausgebildet" synonym verwendet werden.

Der Begriff "Überstromschutzeinrichtung" kann für den Begriff "Sicherung" synonym verwendet werden.

Der Begriff "aufgrund" kann für den Begriff "bei" synonym verwendet werden.

Der Begriff "unterbrochener" kann für den Begriff "ausgelöster" synonym verwendet werden.

Die Formulierung "keiner Auslösung der" kann für den Begriff "nicht-ausgelöster" synonym verwendet werden.

Die Formulierung "Auslösung der" kann für den Begriff "ausgelöster" synonym verwendet werden.

Der Begriff "Informationsübertragung" kann für den Begriff "Datenübertragung" synonym verwendet werden.

Die Formulierung "zur Unterbrechung bzw. Beendigung der Datenübertragung" kann für die Formulierung "zu keiner Datenübertragung" synonym verwendet werden.

Die Formulierung "zur Sperrung" kann für die Formulierung "zu keiner Freigabe" synonym verwendet werden.

Der Begriff "Bearbeitungsbetrieb" kann für den Begriff "Antriebsbetrieb" synonym verwendet werden.

Die Formulierung "zeitlich unbeschränkt" kann für die Formulierung "zeitlich dauerhaft" synonym verwendet werden.

Die ausgelöste Sicherung kann zeitlich dauerhaft ausgelöst bleiben.

Die Versorgung, die Datenübertragung, die Erkennung und/oder die Freigabe können/kann automatisch und/oder zeitlich dauerhaft sein.

Die elektrische Verbindung kann unmittelbar und/oder werkzeugfrei und/oder zerstörungsfrei lösbar sein, insbesondere durch einen Benutzer des Systems.

Der Akkupack und das Bearbeitungsgerät oder das Ladegerät können zur, insbesondere werkzeugfrei und/oder zerstörungsfrei, lösbaren mechanischen Verbindung miteinander ausgebildet sein.

Zu einem Zeitpunkt können, insbesondere entweder, der Akkupack und das Bearbeitungsgerät oder der Akkupack und das Ladegerät miteinander elektrisch verbunden sein.

Zu einem Zeitpunkt kann der Akkupack zu, insbesondere entweder, dem Bearbeitungsgerät oder dem Ladegerät Datenübertragen.

Der Akkupack kann eine, insbesondere elektrische, Datenübertragungseinrichtung bzw. einen Sender aufweisen. Die Datenübertragungseinrichtung kann zu der Datenübertragung ausgebildet sein.

Das Bearbeitungsgerät oder das Ladegerät kann eine, insbesondere elektrische, Erkennungseinrichtung bzw. einen Empfänger aufweisen. Die Erkennungseinrichtung kann zu der Erkennung ausgebildet sein.

Die Erkennung der Datenübertragung kann zu der Freigabe und/oder zu keiner Freigabe ausreichend sein. Zusätzlich oder alternativ kann die Erkennung der Datenübertragung zu der Freigabe mindestens erforderlich sein. Insbesondere kann zu der Freigabe die Erkennung eines, insbesondere vorgegebenen, Inhalts der Datenübertragung erforderlich sein. Mit anderen Worten: Die Erkennung der Datenübertragung braucht oder kann nicht ausreichend sein.

In einer Weiterbildung der Erfindung ist das Bearbeitungsgerät oder das Ladegerät zu der Erkennung der Datenübertragung zur Ausgabe und/oder, insbesondere kabellosen, Übertragung einer, insbesondere benutzerwahrnehmbaren, Information basierend auf der nicht-ausgelösten Sicherung und keiner Datenübertragung zu keiner Ausgabe und/oder keiner Übertragung der Information ausgebildet. Zusätzlich oder alternativ ist das Bearbeitungsgerät oder das Ladegerät zu der Erkennung keiner Datenübertragung zur Ausgabe und/oder, insbesondere kabellosen, Übertragung einer, insbesondere benutzerwahrnehmbaren, Information basierend auf der ausgelösten Sicherung ausgebildet. Dies ermöglicht einen Fehler des Systems, insbesondere des Akkupacks, aufgrund der ausgelösten Sicherung wahrzunehmen. Insbesondere können/kann die Ausgabe und/oder die Übertragung automatisch sein. Zusätzlich oder alternativ kann die Ausgabe eine Anzeige sein. Weiter zusätzlich oder alternativ kann der Begriff "drahtlos" oder "berührungslos" für den Begriff "kabellos" synonym verwendet werden. Weiter zusätzlich oder alternativ kann die Information ein Inhalt der Information sein. Weiter zusätzlich oder alternativ kann der Begriff "über" für die Formulierung "basierend auf" synonym verwendet werden. Weiter zusätzlich oder alternativ kann das Bearbeitungsgerät oder das Ladegerät eine, insbesondere elektrische, Ausgabe- und/oder Übertragungseinrichtung aufweisen. Die Ausgabe- und/oder Übertragungseinrichtung kann zu der Ausgabe und/oder der Übertragung ausgebildet sein.

Insbesondere braucht oder kann nicht der Akkupack bei ausgelöster Sicherung zu keiner Versorgung des Bearbeitungsgeräts mit elektrischer Antriebsleistung von dem Akkupack oder des Akkupacks mit elektrischer Aufladeleistung von dem Ladegerät ausgebildet sein.

In einer Weiterbildung, insbesondere einer Ausgestaltung, der Erfindung ist der Akkupack bei ausgelöster, und insbesondere nicht-ausgelöster, Sicherung, und insbesondere bei elektrischer Verbindung, zu der Versorgung des Bearbeitungsgeräts mit elektrischer Antriebsleistung von dem Akkupack zu der Erkennung keiner Datenübertragung, insbesondere zu der Ausgabe und/oder der Übertragung der Information, ausgebildet. Dies ermöglicht die Versorgung mit, insbesondere wenig, Leistung und/oder, insbesondere somit, die Erkennung, und insbesondere die Ausgabe und/oder die Übertragung.

In einer Weiterbildung der Erfindung ist die Sicherung eine Überstromschutzsicherung, insbesondere eine Schmelzsicherung. Dies, insbesondere die Schmelzsicherung, ermöglicht, dass die ausgelöste Sicherung zeitlich dauerhaft ausgelöst bleiben kann, und/oder einen einfachen Aufbau des Akkupacks.

In einer Weiterbildung der Erfindung weist der Akkupack eine Leiterplatte auf. Die Sicherung ist der Leiterplatte zugeordnet. Insbesondere trägt die Leiterplatte die Sicherung. Insbesondere ist die Sicherung eine Leiterbahnsicherung. Insbesondere weist der Akkupack eine, insbesondere die, Datenübertragungseinrichtung, insbesondere ein Batteriemanagementsystem aufweisend die Datenübertragungseinrichtung, auf. Die Datenübertragungseinrichtung ist zu der Datenübertragung ausgebildet. Die Datenübertragungseinrichtung ist der Leiterplatte zugeordnet. Insbesondere trägt die Leiterplatte die Datenübertragungseinrichtung. Insbesondere trägt die Leiterplatte das Batteriemanagementsystem. Dies ermöglicht einen einfachen Aufbau des Akkupacks. Insbesondere kann die Leiterplatte starr bzw. unflexibel oder flexibel sein. Insbesondere kann für den Begriff "flexible Leiterplatte" der Begriff "Leiterfolie" synonym verwendet werden. Zusätzlich oder alternativ kann die Leiterbahnsicherung mindestens, insbesondere nur, ein Abschnitt einer, insbesondere strukturierten, Leiterbahn sein. Weiter zusätzlich oder alternativ kann das Batteriemanagementsystem elektrisch sein. Weiter zusätzlich oder alternativ kann die Datenübertragungseinrichtung bei nicht-ausgelöster Sicherung zu der Datenübertragung und bei ausgelöster Sicherung zu keiner Datenübertragung ausgebildet sein.

In einer Weiterbildung der Erfindung weist der Akkupack einen Leistungspfad zu der Versorgung des Bearbeitungsgeräts mit elektrischer Antriebsleistung von dem Akkupack oder des Akkupacks mit elektrischer Aufladeleistung von dem Ladegerät auf. Der Akkupack weist eine, insbesondere die, Datenübertragungseinrichtung, insbesondere ein Batteriemanagementsystem aufweisend die Datenübertragungseinrichtung, auf. Die Datenübertragungseinrichtung ist zu der Datenübertragung ausgebildet. Der Akkupack weist einen von dem Leistungspfad verschiedenen Einrichtungspfad zur Versorgung der Datenübertragungseinrichtung, insbesondere des Batteriemanagementsystems, mit elektrischer Einrichtungsleistung auf. Die Sicherung ist in dem Einrichtungspfad, insbesondere in einem Bezugspotentialabschnitt des Einrichtungspfads, angeordnet, insbesondere elektrisch angeordnet. Dies ermöglicht bei ausgelöster Sicherung keine Versorgung der Datenübertragungseinrichtung, insbesondere des Batteriemanagementsystems, mit elektrischer Einrichtungsleistung. Somit ermöglicht dies bei ausgelöster Sicherung keine Datenübertragung. Zusätzlich oder alternativ ermöglicht dies bei ausgelöster Sicherung die Versorgung des Bearbeitungsgeräts mit elektrischer Antriebsleistung von dem Akkupack oder des Akkupacks mit elektrischer Aufladeleistung von dem Ladegerät. Somit ermöglicht dies bei ausgelöster Sicherung die Erkennung, insbesondere keiner Datenübertragung. Insbesondere können/kann der Leistungspfad und/oder der Einrichtungspfad elektrisch sein. Zusätzlich oder alternativ kann für den Begriffsbestandteil "Pfad" der Begriffsbestandteil "Stromkreis" synonym verwendet werden. Weiter zusätzlich oder alternativ kann das Batteriemanagementsystem elektrisch sein. Weiter zusätzlich oder alternativ kann die Datenübertragungseinrichtung bei nicht-ausgelöster Sicherung zu der Datenübertragung und bei ausgelöster Sicherung zu keiner Datenübertragung ausgebildet sein. Weiter zusätzlich oder alternativ kann die Versorgung automatisch und/oder von mindestens einer Akkumulatorzelle des Akkupacks sein. Weiter zusätzlich oder alternativ kann der Begriff "Massepotentialabschnitt" für den Begriff "Bezugspotentialabschnitt" synonym verwendet werden. Weiter zusätzlich oder alternativ braucht oder kann nicht die Sicherung in dem Leistungspfad angeordnet sein. Der Leistungspfad braucht oder kann nicht zu der Versorgung der Datenübertragungseinrichtung, insbesondere des Batteriemanagementsystems, mit elektrischer Einrichtungsleistung sein.

In einer Weiterbildung der Erfindung weist die Sicherung einen Auslösestromwert auf. Der Akkupack, insbesondere mindestens eine Akkumulatorzelle des Akkupacks, ist zu der Versorgung des Bearbeitungsgeräts mit elektrischer Antriebsleistung von dem Akkupack oder des Akkupacks mit elektrischer Aufladeleistung von dem Ladegerät mit einem Nennstromwert ausgebildet. Der Auslösestromwert ist kleiner als der Nennstromwert. Insbesondere beträgt der Auslösestromwert weniger als 50 % (Prozent), insbesondere weniger als 25 %, des Nennstromwerts. Zusätzlich oder alternativ ist der Auslösestromwert maximal 10 A (Ampere), insbesondere maximal 5 A. Insbesondere kann der Begriff "Überstromwert" für den Begriff "Auslösestromwert" synonym verwendet werden. Zusätzlich oder alternativ kann die Sicherung bei dem Auslösestromwert auslösen. Weiter zusätzlich oder alternativ kann der Auslösestromwert von Null verschieden sein.

In einer Weiterbildung der Erfindung weist der Akkupack einen, insbesondere den, Leistungspfad zu der Versorgung des Bearbeitungsgeräts mit elektrischer Antriebsleistung von dem Akkupack oder des Akkupacks mit elektrischer Aufladeleistung von dem Ladegerät und mindestens, insbesondere nur, eine, insbesondere einzige, von der Sicherung verschiedene elektrische Leistungssicherung auf. Die mindestens eine Leistungssicherung ist in dem Leistungspfad angeordnet, insbesondere elektrisch angeordnet. Insbesondere weist die mindestens eine Leistungssicherung einen Leistungsauslösestromwert auf. Der Akkupack, insbesondere mindestens eine Akkumulatorzelle des Akkupacks, ist zu der Versorgung des Bearbeitungsgeräts mit elektrischer Antriebsleistung von dem Akkupack oder des Akkupacks mit elektrischer Aufladeleistung von dem Ladegerät mit einem, insbesondere dem, Nennstromwert ausgebildet. Der Leistungsauslösestromwert ist größer als der Nennstromwert. Zusätzlich oder alternativ ist der Leistungsauslösestromwert minimal 50 A, insbesondere minimal 100 A. Dies ermöglicht bei ausgelöster Leistungssicherung keine Versorgung des Bearbeitungsgeräts mit elektrischer Antriebsleistung von dem Akkupack oder des Akkupacks mit elektrischer Aufladeleistung von dem Ladegerät. Zusätzlich oder alternativ, insbesondere somit, ermöglicht dies, insbesondere die mindestens eine Leistungssicherung, eine, insbesondere weitere, Bewahrung des Akkupacks, und insbesondere somit des Systems, vor, insbesondere weiterer, Beschädigung. Insbesondere kann der Leistungspfad elektrisch sein. Zusätzlich oder alternativ kann für den Begriffsbestandteil "Pfad" der Begriffsbestandteil "Stromkreis" synonym verwendet werden. Weiter zusätzlich oder alternativ kann der Begriff "Leistungsüberstromwert" für den Begriff "Leistungsauslösestromwert" synonym verwendet werden. Weiter zusätzlich oder alternativ kann die mindestens eine Leistungssicherung bei dem Leistungsauslösestromwert auslösen. Weiter zusätzlich oder alternativ kann der Leistungsauslösestromwert von Null verschieden sein. Weiter zusätzlich oder alternativ braucht oder kann nicht die Sicherung in dem Leistungspfad angeordnet sein.

In einer Weiterbildung der Erfindung weist die Datenübertragung eine Übertragung von Daten auf. Insbesondere ist die Datenübertragung die Übertragung von Daten. Die Daten weisen eine Information über einen Identifikator des Akkupacks und/oder eines Typs des Akkupacks und/oder mindestens einen Zustand, insbesondere einen Ladezustand, einen Spannungszustand, einen Temperaturzustand und/oder einen Druckzustand, mindestens einer Akkumulatorzelle des Akkupacks auf. Insbesondere sind die Daten eine solche Information. Dies ermöglicht die Freigabe und/oder keine Freigabe, insbesondere eine Kontrolle und/oder eine Steuerung und/oder eine Regelung, des Antriebsbetriebs des Bearbeitungsgeräts oder des Aufladebetriebs des Ladegeräts. Insbesondere kann die Information ein Inhalt der Information sein. Zusätzlich oder alternativ kann das Batteriemanagementsystem zur Erkennung, Ermittlung und/oder Erfassung des mindestens einen Zustands ausgebildet sein.

In einer Weiterbildung der Erfindung weisen der Akkupack mindestens zwei lösbare Packleistungskontakte, insbesondere Steckverbinder, und das Bearbeitungsgerät oder das Ladegerät mindestens zwei komplementäre lösbare Geräteleistungskontakte, insbesondere Steckverbinder, zu der Versorgung, insbesondere des Bearbeitungsgeräts mit elektrischer Antriebsleistung von dem Akkupack oder des Akkupacks mit elektrischer Aufladeleistung von dem Ladegerät, auf. Zusätzlich weisen der Akkupack mindestens einen von den Packleistungskontakten verschiedenen lösbaren Packdatenübertragungskontakt, insbesondere Steckverbinder, und das Bearbeitungsgerät oder das Ladegerät mindestens einen von den Geräteleistungskontakten verschiedenen komplementären lösbaren Gerätedatenübertragungskontakt, insbesondere Steckverbinder, zu der Datenübertragung auf. Dies ermöglicht die lösbare elektrische Verbindung. Zusätzlich oder alternativ ermöglicht dies eine Trennung der Versorgung und der Datenübertragung voneinander. Insbesondere können/kann der/die Kontakt/e elektrisch und/oder eine Klemme/n bzw. ein Anschluss/Anschlüsse bzw. ein Terminal/s sein. Zusätzlich oder alternativ können sich die komplementären Kontakte, insbesondere unmittelbar, berühren. Weiter zusätzlich oder alternativ kann der Begriff "getrennt", insbesondere "elektrisch isoliert", für den Begriff "verschieden" synonym verwendet werden.

In einer Weiterbildung der Erfindung sind der Akkupack und das Bearbeitungsgerät oder das Ladegerät zur Entnahme und/oder zum Austausch des Akkupacks ausgebildet, insbesondere durch einen Benutzer des Systems. Insbesondere kann das Bearbeitungsgerät oder das Ladegerät einen Akkuschacht aufweisen, wobei der Akkuschacht zur Aufnahme des Akkupacks ausgebildet sein kann.

In einer Weiterbildung der Erfindung ist das Bearbeitungsgerät boden- und/oder handgeführt, insbesondere handgetragen, und/oder ein Garten-, Forst-, Bau- und/oder Bodenbearbeitungsgerät. Insbesondere ist das Bearbeitungsgerät eine Säge, insbesondere eine Kettensäge, oder ein Hoch-Entaster, oder eine Heckenschere, oder ein Heckenschneider, oder ein Gehölzschneider, oder eine Astschere, ein Trennschleifer, oder ein Blasgerät, oder ein Laubbläser, oder ein Sauggerät, oder ein Laubsauger, oder ein Reinigungsgerät, oder ein Hochdruckreiniger, oder ein Kehrgerät, oder eine Kehrwalze, oder eine Kehrbürste, oder ein Rasenmäher, oder eine Grasschere, oder ein Freischneider, oder ein Vertikutierer. Insbesondere kann das Bearbeitungsgerät ein, insbesondere autonomer, Garten-, Forst-, Bau- und/oder Bodenbearbeitungsroboter, insbesondere ein Rasenmähroboter, sein.

Der erfindungsgemäße Akkupack ist für ein, insbesondere das, System wie vorhergehend genannt, insbesondere ausgebildet. Insbesondere ist der Akkupack zu der lösbaren elektrischen Verbindung mit dem Bearbeitungsgerät oder dem Ladegerät zu der Versorgung des Bearbeitungsgeräts mit elektrischer Antriebsleistung von dem Akkupack oder des Akkupacks mit elektrischer Aufladeleistung von dem Ladegerät ausgebildet. Der Akkupack weist die elektrische Sicherung auf und ist bei nicht-ausgelöster Sicherung zu der Datenübertragung von dem Akkupack zu dem Bearbeitungsgerät oder dem Ladegerät und bei ausgelöster Sicherung zu keiner Datenübertragung ausgebildet.

Das erfindungsgemäße elektrisch angetriebene Bearbeitungsgerät oder das erfindungsgemäße Ladegerät ist für ein, insbesondere das, System wie vorhergehend genannt, insbesondere ausgebildet. Insbesondere ist das Bearbeitungsgerät oder das Ladegerät zu der lösbaren elektrischen Verbindung mit dem Akkupack zu der Versorgung des Bearbeitungsgeräts mit elektrischer Antriebsleistung von dem Akkupack oder des Akkupacks mit elektrischer Aufladeleistung von dem Ladegerät ausgebildet. Das Bearbeitungsgerät oder das Ladegerät ist bei elektrischer Verbindung zu der Erkennung der Datenübertragung zu der Freigabe des Antriebsbetriebs des Bearbeitungsgeräts oder des Aufladebetriebs des Ladegeräts und keiner Datenübertragung zu keiner Freigabe des Antriebsbetriebs oder des Aufladebetriebs ausgebildet.

Das erfindungsgemäße Verfahren ist zum Betreiben eines, insbesondere des, Systems wie vorhergehend genannt vorgesehen bzw. ausgebildet. Das Verfahren weist, insbesondere die Schritte, auf: Bei nicht-ausgelöster Sicherung Datenübertragen von dem Akkupack zu dem Bearbeitungsgerät oder dem Ladegerät, und bei elektrischer Verbindung Erkennen der Datenübertragung zur Freigabe des Antriebsbetriebs des Bearbeitungsgeräts oder des Aufladebetriebs des Ladegeräts. Bei ausgelöster Sicherung kein Datenübertragen, und bei elektrischer Verbindung Erkennen keiner Datenübertragung zu keiner Freigabe des Antriebsbetriebs oder des Ladebetriebs. Insbesondere können/kann das Verfahren und/oder das Betreiben automatisch sein. Zusätzlich oder alternativ kann das Verfahren mittels eines, insbesondere des, Systems wie vorhergehend genannt ausgeführt werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: schematisch ein erfindungsgemäßes System aufweisend einen erfindungsgemäßen Akkupack, ein erfindungsgemäßes elektrisch angetriebenes Bearbeitungsgerät oder ein erfindungsgemäßes Ladegerät und ein erfindungsgemäßes Verfahren zum Betreiben des Systems mit einer Kommunikations-Datenübertragung,
- Fig. 2: schematisch das System, den Akkupack, das Bearbeitungsgerät, das Ladegerät und das Verfahren der Fig. 1 mit einer Alarm-Datenübertragung, und
- Fig. 3: schematisch das System, den Akkupack, das Bearbeitungsgerät, das Ladegerät und das Verfahren der Fig. 1 und 2.

### DETAILLIERTE BESCHREIBUNG DER AUSFÜHRUNGSBEISPIELE

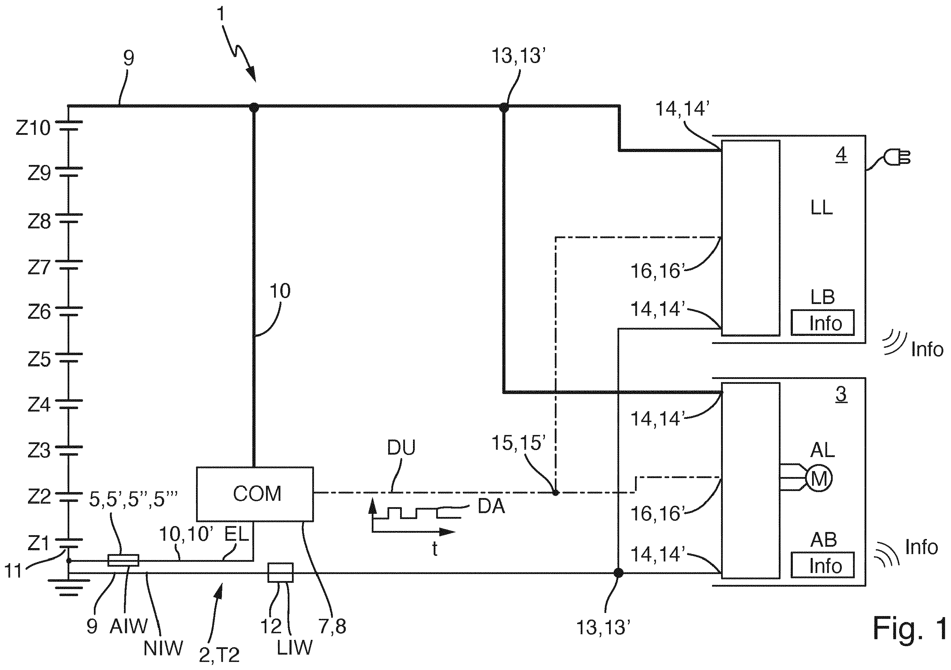

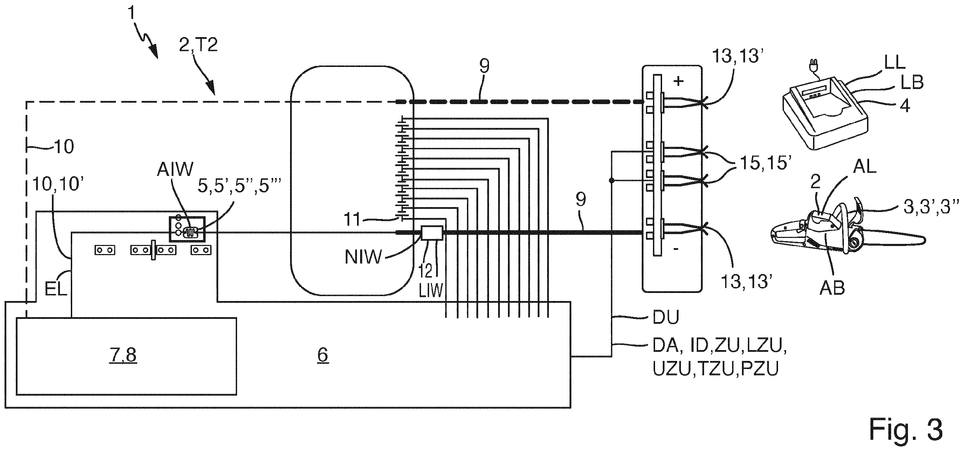

Fig. 1 bis 3 zeigen ein erfindungsgemäßes System 1 und ein erfindungsgemäßes Verfahren zum Betreiben des Systems 1.

Das System 1 weist einen erfindungsgemäßen Akkupack 2 und ein erfindungsgemäßes elektrisch angetriebenes Bearbeitungsgerät 3 oder ein erfindungsgemäßes Ladegerät 4 auf. Der Akkupack 2 und das Bearbeitungsgerät 3 oder das Ladegerät 4 sind zur lösbaren elektrischen Verbindung miteinander zur Versorgung des Bearbeitungsgeräts mit elektrischer Antriebsleistung AL von dem Akkupack 2 oder des Akkupacks 2 mit elektrischer Aufladeleistung LL von dem Ladegerät 4 ausgebildet, insbesondere lösbar elektrisch verbunden, und insbesondere versorgt. Der Akkupack 2 weist eine elektrische Sicherung 5 auf. Der Akkupack 2 ist bei nicht-ausgelöster Sicherung 5 zur Datenübertragung DU von dem Akkupack 2 zu dem Bearbeitungsgerät 3 oder dem Ladegerät 4 ausgebildet, insbesondere datenüberträgt. Der Akkupack 2 ist bei ausgelöster Sicherung 5 zu keiner Datenübertragung ausgebildet, insbesondere datenüberträgt nicht. Das Bearbeitungsgerät 3 oder das Ladegerät 4 ist bei elektrischer Verbindung zur Erkennung der Datenübertragung DU zur Freigabe eines Antriebsbetriebs AB des Bearbeitungsgeräts 3 oder eines Aufladebetriebs LB des Ladegeräts 4 ausgebildet, insbesondere erkennt, und insbesondere gibt frei. Das Bearbeitungsgerät 3 oder das Ladegerät 4 ist bei elektrischer Verbindung zu der Erkennung keiner Datenübertragung zu keiner Freigabe des Antriebsbetriebs oder des Ladebetriebs ausgebildet, insbesondere erkennt, und insbesondere gibt nicht frei.

Das Verfahren weist auf: Bei nicht-ausgelöster Sicherung 5 Datenübertragen DU von dem Akkupack 2 zu dem Bearbeitungsgerät 3 oder dem Ladegerät 4, und bei elektrischer Verbindung Erkennen der Datenübertragung DU zur Freigabe des Antriebsbetriebs AB des Bearbeitungsgeräts 3 oder des Aufladebetriebs LB des Ladegeräts 4. Bei ausgelöster Sicherung 5 kein Datenübertragen, und bei elektrischer Verbindung Erkennen keiner Datenübertragung zu keiner Freigabe des Antriebsbetriebs oder des Ladebetriebs.

Im Detail ist das Bearbeitungsgerät 3 oder das Ladegerät 4 zu der Erkennung der Datenübertragung DU zur Ausgabe und/oder, insbesondere kabellosen, Übertragung einer, insbesondere benutzerwahrnehmbaren, Information Info basierend auf der nicht-ausgelösten Sicherung 5 und keiner Datenübertragung zu keiner Ausgabe und/oder keiner Übertragung der Information ausgebildet, insbesondere erkennt, und insbesondere gibt aus oder nicht und/oder überträgt oder nicht.

Zusätzlich oder alternativ ist das Bearbeitungsgerät 3 oder das Ladegerät 4 zu der Erkennung keiner Datenübertragung zur Ausgabe und/oder, insbesondere kabellosen, Übertragung einer, insbesondere benutzerwahrnehmbaren, Information Info basierend auf der ausgelösten Sicherung 5 ausgebildet, insbesondere erkennt, und insbesondere gibt aus und/oder überträgt.

Des Weiteren ist der Akkupack 2 bei ausgelöster Sicherung 5 zu der Versorgung des Bearbeitungsgeräts 3 mit elektrischer Antriebsleistung AL von dem Akkupack 2 zu der Erkennung keiner Datenübertragung, insbesondere zu der Ausgabe und/oder der Übertragung der Information Info, ausgebildet, insbesondere versorgt.

Außerdem ist die Sicherung 5 eine Überstromschutzsicherung 5', insbesondere eine Schmelzsicherung 5".

Weiter weist der Akkupack 2 eine Leiterplatte 6 auf. Die Sicherung 5 ist der Leiterplatte 6 zugeordnet. Insbesondere trägt die Leiterplatte 6 die Sicherung 5. Insbesondere ist die Sicherung 5 eine Leiterbahnsicherung 5"'.

Zudem weist der Akkupack 2 eine Datenübertragungseinrichtung 7, insbesondere ein Batteriemanagementsystem 8 aufweisend die Datenübertragungseinrichtung 7, auf. Die Datenübertragungseinrichtung 7 ist zu der Datenübertragung DU ausgebildet, insbesondere datenüberträgt.

Im Detail ist die Datenübertragungseinrichtung 7 der Leiterplatte 6 zugeordnet. Insbesondere trägt die Leiterplatte 6 die Datenübertragungseinrichtung 7. Insbesondere trägt die Leiterplatte 6 das Batteriemanagementsystem 8.

Des Weiteren weist der Akkupack 2 einen Leistungspfad 9 zu der Versorgung des Bearbeitungsgeräts 3 mit elektrischer Antriebsleistung AL von dem Akkupack 2 oder des Akkupacks 2 mit elektrischer Aufladeleistung LL von dem Ladegerät 4 auf.

Im Detail weist der Akkupack 2 einen von dem Leistungspfad 9 verschiedenen Einrichtungspfad 10 zur Versorgung der Datenübertragungseinrichtung 7, insbesondere des Batteriemanagementsystems 8, mit elektrischer Einrichtungsleistung EL auf. Die Sicherung 5 ist in dem Einrichtungspfad 10, insbesondere in einem Bezugspotentialabschnitt 10' des Einrichtungspfads 10, angeordnet.

Außerdem weist die Sicherung 5 einen Auslösestromwert AIW auf.

Weiter ist der Akkupack 2, insbesondere mindestens eine Akkumulatorzelle 11 des Akkupacks 2, zu der Versorgung des Bearbeitungsgeräts 3 mit elektrischer Antriebsleistung AL von dem Akkupack 2 oder des Akkupacks 2 mit elektrischer Aufladeleistung LL von dem Ladegerät 4 mit einem Nennstromwert NIW ausgebildet, insbesondere versorgt.

Im Detail ist der Auslösestromwert AIW kleiner als der Nennstromwert NIW. Insbesondere beträgt der Auslösestromwert AIW weniger als 50 %, insbesondere weniger als 25 %, des Nennstromwerts NIW.

Zusätzlich oder alternativ ist der Auslösestromwert AIW maximal 10 A.

Zudem weist der Akkupack 2 mindestens eine von der Sicherung 5 verschiedene elektrische Leistungssicherung 12 auf. Die mindestens eine Leistungssicherung 12 ist in dem Leistungspfad 9 angeordnet. Insbesondere weist die mindestens eine Leistungssicherung 12 einen Leistungsauslösestromwert LIW auf. Der Leistungsauslösestromwert LIW ist größer als der Nennstromwert NIW. Zusätzlich oder alternativ ist der Leistungsauslösestromwert LIW minimal 50 A.

Des Weiteren weist die Datenübertragung DU eine Übertragung von Daten DA auf. Insbesondere ist die Datenübertragung du die Übertragung von Daten DA. Die Daten DA weisen eine Information über einen Identifikator ID des Akkupacks 2 und/oder eines Typs T2 des Akkupacks 2 und/oder mindestens einen Zustand ZU, insbesondere einen Ladezustand LZU, einen Spannungszustand UZU, einen Temperaturzustand TZU und/oder einen Druckzustand PZU, mindestens einer Akkumulatorzelle 11 des Akkupacks 2 auf. Insbesondere sind die Daten DA eine solche Information.

Außerdem weisen der Akkupack 2 mindestens zwei lösbare Packleistungskontakte 13, insbesondere Steckverbinder 13', und das Bearbeitungsgerät 3 oder das Ladegerät 4 mindestens zwei komplementäre lösbare Geräteleistungskontakte 14, insbesondere Steckverbinder 14', zu der Versorgung auf. Zusätzlich weisen der Akkupack 2 mindestens einen von den Packleistungskontakten 13 verschiedenen lösbaren Packdatenübertragungskontakt 15, insbesondere Steckverbinder 15', und das Bearbeitungsgerät 3 oder das Ladegerät 4 mindestens einen von den Geräteleistungskontakten 14 verschiedenen komplementären lösbaren Gerätedatenübertragungskontakt 16, insbesondere Steckverbinder 16', zu der Datenübertragung DU auf.

Weiter sind der Akkupack 2 und das Bearbeitungsgerät 3 oder das Ladegerät 4 zur Entnahme und/oder zum Austausch des Akkupacks 2 ausgebildet.

Zudem ist das Bearbeitungsgerät 3 boden- und/oder handgeführt, insbesondere handgetragen, und/oder ein Garten-, Forst-, Bau- und/oder Bodenbearbeitungsgerät 3'.

In dem gezeigten Ausführungsbeispiel ist das Bearbeitungsgerät 3 eine Säge 3". In alternativen Ausführungsbeispielen kann das Bearbeitungsgerät ein Hoch-Entaster, oder eine Heckenschere, oder ein Heckenschneider, oder ein Gehölzschneider, oder eine Astschere, ein Trennschleifer, oder ein Blasgerät, oder ein Laubbläser, oder ein Sauggerät, oder ein Laubsauger, oder ein Reinigungsgerät, oder ein Hochdruckreiniger, oder ein Kehrgerät, oder eine Kehrwalze, oder eine Kehrbürste, oder ein Rasenmäher, oder eine Grasschere, oder ein Freischneider, oder ein Vertikutierer sein.

Im Detail sind der Leistungspfad 9, insbesondere abschnittsweise, und der Einrichtungspfad 10, fest bzw. zeitlich dauerhaft und/oder unmittelbar, elektrisch parallel verschaltet bzw. geschaltet bzw. verbunden, insbesondere elektrisch seriell mit bzw. zwischen die Packleistungskontakte 13 verschaltet bzw. geschaltet bzw. verbunden.

Des Weiteren weist in dem gezeigten Ausführungsbeispiel der Akkupack 2 zehn Akkumulatorzellen 11 auf. In alternativen Ausführungsbeispiel kann der Akkupack weniger oder mehr als zehn Akkumulatorzellen aufweisen.

Außerdem sind die Akkumulatorzellen 11, fest bzw. zeitlich dauerhaft und/oder unmittelbar, elektrisch seriell verschaltet bzw. geschaltet bzw. verbunden, insbesondere in dem Leistungspfad 9 und/oder elektrisch seriell mit bzw. zwischen die Packleistungskontakte 13 verschaltet bzw. geschaltet bzw. verbunden.

Weiter ist in dem gezeigten Ausführungsbeispiel eine, insbesondere elektrische, Nennspannung des Akkupacks 2, des Bearbeitungsgeräts 3 und/oder des Ladegeräts 4 36 V. In alternativen Ausführungsbeispielen kann die Nennspannung weniger oder mehr als 36 V sein, insbesondere 18 V oder 72 V.

Zusätzlich oder alternativ ist die, insbesondere maximale, Antriebsleistung AL oder Aufladeleistung LL minimal 10 Watt (W), insbesondere minimal 100 W, insbesondere minimal 1 kW (Kilowatt), insbesondere minimal 2 kW, und/oder maximal 10 kW, insbesondere maximal 5 kW, insbesondere 3kW.

Weiter zusätzlich oder alternativ ist ein maximaler, insbesondere elektrischer, Energieinhalt, insbesondere Nennenergieinhalt, des Akkupacks 2 minimal 100 Wh (Wattstunden), insbesondere minimal 200 Wh, und/oder maximal 4000 Wh, insbesondere maximal 2000 Wh, insbesondere maximal 1000 Wh, insbesondere maximal 500 Wh, insbesondere 337 Wh.

Zudem ist das Batteriemanagementsystem 8 zur Erkennung, Ermittlung und/oder Erfassung des Zustands ZU der Akkumulatorzellen 11 einzeln ausgebildet, insbesondere erkennt, ermittelt und/oder erfasst.

Weiter ist in dem gezeigten Ausführungsbeispiel der Akkupack 2, insbesondere das Batteriemanagementsystem 8, passiv bzw. ohne Leistungsschalter. In alternativen Ausführungsbeispielen kann der Akkupack, insbesondere das Batteriemanagementsystem aktiv bzw. mit mindestens einem Leistungsschalter sein.

Zusammenfassend mit anderen Worten:
Die Sicherung 5 unterbricht ein Bezugspotential, insbesondere ein Masse- bzw. Ground-Bezugspotential, auf das Batteriemanagementsystem 8. Somit fehlt ein Kommunikations-Bezugspotential für eine erfolgreiche Kommunikation, insbesondere mit der Datenübertragung DU, von dem Akkupack 2 mit dem Bearbeitungsgerät 3 oder dem Ladegerät 4, insbesondere in Fig.1. Das Bearbeitungsgerät 3 oder das Ladegerät 4 wird weiterhin von dem Akkupack 2, insbesondere der mindestens einen Akkumulatorzelle 11, mit Leistung bzw. Spannung versorgt. Das Bearbeitungsgerät 3 oder das Ladegerät 4 erkennt durch die fehlende Kommunikation den Fehler in dem Akkupack 2. Der Fehler kann in dem Bearbeitungsgerät 3 oder dem Ladegerät 4 dargestellt werden. Zusätzlich oder alternativ kann eine Fehlermeldung über eine Pushnachricht, insbesondere an einen Benutzer, ausgegeben und übertragen werden, insbesondere von dem Rasenmähroboter.

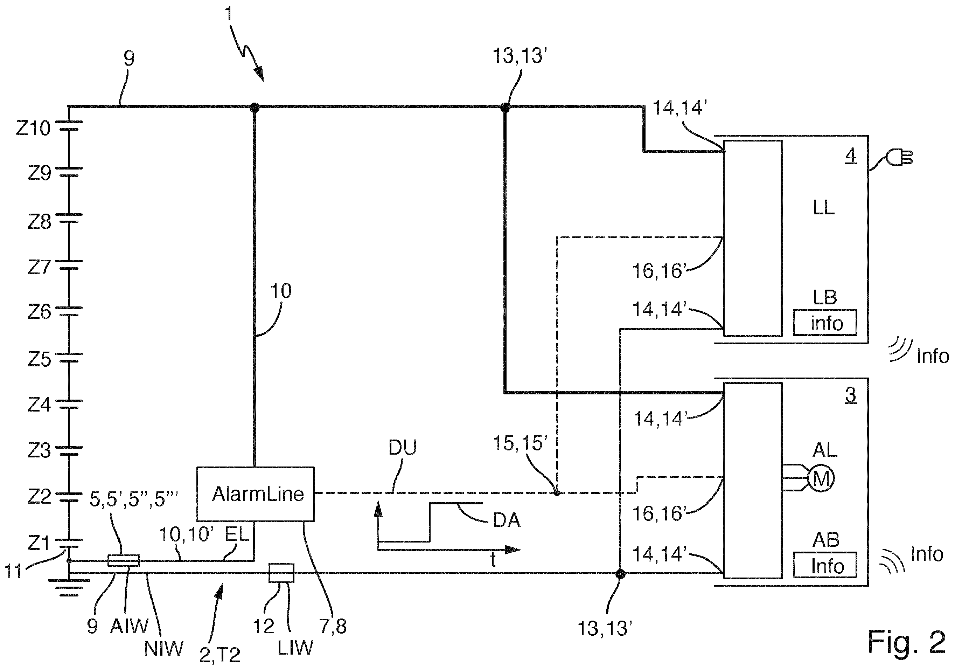

Insbesondere in Fig. 2, fehlt ein Alarm-Bezugspotential für einen erfolgreiche Zustands- bzw. Status-Erkennung bzw. -Auswertung in dem Bearbeitungsgerät 3 oder dem Ladegerät 4. Das Bearbeitungsgerät 3 oder das Ladegerät 4 wird weiterhin von dem Akkupack 2, insbesondere der mindestens einen Akkumulatorzelle 11, mit Leistung bzw. Spannung versorgt. Das Bearbeitungsgerät 3 oder das Ladegerät 4 erkennt durch das fehlende Alarm-Bezugspotential bzw. durch die fehlende Alarm-Spannung den Fehler in dem Akkupack 2.

Wie die gezeigten und oben erläuterten Ausführungsbeispiele deutlich machen, stellt die Erfindung ein vorteilhaftes System, einen vorteilhaften Akkupack für ein solches System, ein vorteilhaftes elektrisch angetriebenes Bearbeitungsgerät oder ein vorteilhaftes Ladegerät für ein solches System und ein vorteilhaftes Verfahren zum Betreiben eines solchen Systems bereit, das jeweils verbesserte Eigenschaften aufweist.

## Patentansprüche

1. System (1), wobei das System (1) aufweist:
- einen Akkupack (2), und
- ein elektrisch angetriebenes Bearbeitungsgerät (3) oder ein Ladegerät (4),
- wobei der Akkupack (2) und das Bearbeitungsgerät (3) zur lösbaren elektrischen Verbindung miteinander zur Versorgung des Bearbeitungsgeräts (3) mit elektrischer Antriebsleistung (AL) von dem Akkupack (2) ausgebildet sind, oder
- wobei der Akkupack (2) und das Ladegerät (4) zur lösbaren elektrischen Verbindung miteinander zur Versorgung des Akkupacks (2) mit elektrischer Aufladeleistung (LL) von dem Ladegerät (4) ausgebildet sind,
- wobei der Akkupack (2) eine elektrische Sicherung (5) aufweist und bei nicht-ausgelöster Sicherung (5) zur Datenübertragung (DU) von dem Akkupack (2) zu dem Bearbeitungsgerät (3) oder dem Ladegerät (4) und bei ausgelöster Sicherung (5) zu keiner Datenübertragung ausgebildet ist,
- wobei das Bearbeitungsgerät (3) oder das Ladegerät (4) bei elektrischer Verbindung zur Erkennung der Datenübertragung (DU) zur Freigabe eines Antriebsbetriebs (AB) des Bearbeitungsgeräts (3) oder eines Aufladebetriebs (LB) des Ladegeräts (4) und keiner Datenübertragung zu keiner Freigabe des Antriebsbetriebs oder des Ladebetriebs ausgebildet ist.

2. System (1) nach Anspruch 1,
- wobei das Bearbeitungsgerät (3) oder das Ladegerät (4) zu der Erkennung der Datenübertragung (DU) zur Ausgabe und/oder, insbesondere kabellosen, Übertragung einer, insbesondere benutzerwahrnehmbaren, Information (Info) basierend auf der nicht-ausgelösten Sicherung (5) und keiner Datenübertragung zu keiner Ausgabe und/oder keiner Übertragung der Information und/oder keiner Datenübertragung zur Ausgabe und/oder, insbesondere kabellosen, Übertragung einer, insbesondere benutzerwahrnehmbaren, Information (Info) basierend auf der ausgelösten Sicherung (5) ausgebildet ist.

3. System (1) nach Anspruch 1 oder 2,
- wobei der Akkupack (2) bei ausgelöster Sicherung (5) zu der Versorgung des Bearbeitungsgeräts (3) mit elektrischer Antriebsleistung (AL) von dem Akkupack (2) zu der Erkennung keiner Datenübertragung, insbesondere zu der Ausgabe und/oder der Übertragung der Information (Info), ausgebildet ist.

4. System (1) nach einem der vorhergehenden Ansprüche,
- wobei die Sicherung (5) eine Überstromschutzsicherung (5'), insbesondere eine Schmelzsicherung (5"), ist.

5. System (1) nach einem der vorhergehenden Ansprüche,
- wobei der Akkupack (2) eine Leiterplatte (6) aufweist, wobei die Sicherung (5) der Leiterplatte (6) zugeordnet ist, insbesondere wobei die Leiterplatte (6) die Sicherung (5) trägt, insbesondere wobei die Sicherung (5) eine Leiterbahnsicherung (5"') ist,
- und insbesondere wobei der Akkupack (2) eine Datenübertragungseinrichtung (7), insbesondere ein Batteriemanagementsystem (8) aufweisend die Datenübertragungseinrichtung (7), aufweist, wobei die Datenübertragungseinrichtung (7) zu der Datenübertragung (DU) ausgebildet ist, und wobei die Datenübertragungseinrichtung (7) der Leiterplatte (6) zugeordnet ist, insbesondere wobei die Leiterplatte (6) die Datenübertragungseinrichtung (7) trägt, insbesondere wobei die Leiterplatte (6) das Batteriemanagementsystem (8) trägt.

6. System (1) nach einem der vorhergehenden Ansprüche,
- wobei der Akkupack (2) einen Leistungspfad (9) zu der Versorgung des Bearbeitungsgeräts (3) mit elektrischer Antriebsleistung (AL) von dem Akkupack (2) oder des Akkupacks (2) mit elektrischer Aufladeleistung (LL) von dem Ladegerät (3) aufweist,
- wobei der Akkupack (2) eine Datenübertragungseinrichtung (7), insbesondere ein Batteriemanagementsystem (8) aufweisend die Datenübertragungseinrichtung (7), aufweist, wobei die Übertragungseinrichtung (7) zu der Datenübertragung (DU) ausgebildet ist, und
- wobei der Akkupack (2) einen von dem Leistungspfad (9) verschiedenen Einrichtungspfad (10) zur Versorgung der Datenübertragungseinrichtung (7), insbesondere des Batteriemanagementsystems (8), mit elektrischer Einrichtungsleistung (EL) aufweist,
- wobei die Sicherung (5) in dem Einrichtungspfad (10), insbesondere in einem Bezugspotentialabschnitt (10') des Einrichtungspfads (10), angeordnet ist.

7. System (1) nach einem der vorhergehenden Ansprüche,
- wobei die Sicherung (5) einen Auslösestromwert (AIW) aufweist,
- wobei der Akkupack (2), insbesondere mindestens eine Akkumulatorzelle (11) des Akkupacks (2), zu der Versorgung des Bearbeitungsgeräts (3) mit elektrischer Antriebsleistung (AL) von dem Akkupack (2) oder des Akkupacks (2) mit elektrischer Aufladeleistung (LL) von dem Ladegerät (4) mit einem Nennstromwert (NIW) ausgebildet ist, wobei der Auslösestromwert (AIW) kleiner als der Nennstromwert (NIW) ist, insbesondere wobei der Auslösestromwert (AIW) weniger als 50 %, insbesondere weniger als 25 %, des Nennstromwerts (NIW) beträgt, und/oder
- wobei der Auslösestromwert (AIW) maximal 10 A ist.

8. System (1) nach einem der vorhergehenden Ansprüche,
- wobei der Akkupack (2) einen Leistungspfad (9) zu der Versorgung des Bearbeitungsgeräts (3) mit elektrischer Antriebsleistung (AL) von dem Akkupack (2) oder des Akkupacks (2) mit elektrischer Aufladeleistung (LL) von dem Ladegerät (4) und mindestens eine von der Sicherung (5) verschiedene elektrische Leistungssicherung (12) aufweist, wobei die mindestens eine Leistungssicherung (12) in dem Leistungspfad (9) angeordnet ist,
- insbesondere wobei die mindestens eine Leistungssicherung (12) einen Leistungsauslösestromwert (LIW) aufweist,
- wobei der Akkupack (2), insbesondere mindestens eine Akkumulatorzelle (11) des Akkupacks (2), zu der Versorgung des Bearbeitungsgeräts (3) mit elektrischer Antriebsleistung (AL) von dem Akkupack (2) oder des Akkupacks (2) mit elektrischer Aufladeleistung (LL) von dem Ladegerät (4) mit einem Nennstromwert (NIW) ausgebildet ist, wobei der Leistungsauslösestromwert (LIW) größer als der Nennstromwert (NIW) ist, und/oder
- wobei der Leistungsauslösestromwert (NIW) minimal 50 A ist.

9. System (1) nach einem der vorhergehenden Ansprüche,
- wobei die Datenübertragung (DU) eine Übertragung von Daten (DA) aufweist, insbesondere ist, wobei die Daten (DA) eine Information über einen Identifikator (ID) des Akkupacks (2) und/oder eines Typs (T2) des Akkupacks (2) und/oder mindestens einen Zustand (ZU), insbesondere einen Ladezustand (LZU), einen Spannungszustand (UZU), einen Temperaturzustand (TZU) und/oder einen Druckzustand (PZU), mindestens einer Akkumulatorzelle (11) des Akkupacks (2) aufweisen, insbesondere sind.

10. System (1) nach einem der vorhergehenden Ansprüche,
- wobei der Akkupack (2) mindestens zwei lösbare Packleistungskontakte (13), insbesondere Steckverbinder (13'), und das Bearbeitungsgerät (3) oder das Ladegerät (4) mindestens zwei komplementäre lösbare Geräteleistungskontakte (14), insbesondere Steckverbinder (14'), zu der Versorgung aufweisen, und
- wobei der Akkupack (2) mindestens einen von den Packleistungskontakten (13) verschiedenen lösbaren Packdatenübertragungskontakt (15), insbesondere Steckverbinder (15'), und das Bearbeitungsgerät (3) oder das Ladegerät (4) mindestens einen von den Geräteleistungskontakten (14) verschiedenen komplementären lösbaren Gerätedatenübertragungskontakt (16), insbesondere Steckverbinder (16'), zu der Datenübertragung (DU) aufweisen.

11. System (1) nach einem der vorhergehenden Ansprüche,
- wobei der Akkupack (2) und das Bearbeitungsgerät (3) oder das Ladegerät (4) zur Entnahme und/oder zum Austausch des Akkupacks (2) ausgebildet sind.

12. System (1) nach einem der vorhergehenden Ansprüche,
- wobei das Bearbeitungsgerät (3) boden- und/oder handgeführt, insbesondere handgetragen, und/oder ein Garten-, Forst-, Bau- und/oder Bodenbearbeitungsgerät (3') ist,
- insbesondere wobei das Bearbeitungsgerät (3) eine Säge (3"), oder ein Hoch-Entaster, oder eine Heckenschere, oder ein Heckenschneider, oder ein Gehölzschneider, oder eine Astschere, ein Trennschleifer, oder ein Blasgerät, oder ein Laubbläser, oder ein Sauggerät, oder ein Laubsauger, oder ein Reinigungsgerät, oder ein Hochdruckreiniger, oder ein Kehrgerät, oder eine Kehrwalze, oder eine Kehrbürste, oder ein Rasenmäher, oder eine Grasschere, oder ein Freischneider, oder ein Vertikutierer ist.

13. Akkupack (2) für ein System (1) nach einem der Ansprüche 1 bis 12.

14. Elektrisch angetriebenes Bearbeitungsgerät (3) oder Ladegerät (4) für ein System (1) nach einem der Ansprüche 1 bis 12.

15. Verfahren zum Betreiben eines Systems (1) nach einem der Ansprüche 1 bis 12, wobei das Verfahren aufweist:
- bei nicht-ausgelöster Sicherung (5) Datenübertragen (DU) von dem Akkupack (2) zu dem Bearbeitungsgerät (3) oder dem Ladegerät (4), und bei elektrischer Verbindung Erkennen der Datenübertragung (DU) zur Freigabe des Antriebsbetriebs (AB) des Bearbeitungsgeräts (3) oder des Aufladebetriebs (LB) des Ladegeräts (4), und
- bei ausgelöster Sicherung (5) kein Datenübertragen, und bei elektrischer Verbindung Erkennen keiner Datenübertragung zu keiner Freigabe des Antriebsbetriebs oder des Ladebetriebs.
